# EUROPEAN PATENT SPECIFICATION

(11) **EP 2 426 894 B1**
(45) Date of publication and mention of the grant of the patent: **18.02.2015**
(21) Application number: 10175271.5
(22) Date of filing: 03.09.2010
(51) Int. Cl.: H04L 29/12

(54) **System and method of processing DNS request and DNS reply**
System und Verfahren zur Verarbeitung von DNS-Anfragen und DNS-Antworten
Système et procédé de traitement de requête DNS et réponse DNS

(43) Date of publication of application: 07.03.2012
(73) Proprietor: Deutsche Telekom AG, 53113 Bonn (DE)
(72) Inventor: Poese, Ingmar, 10553 Berlin (DE); Feldmann, Anja, 10717 Berlin (DE); Frank, Benjamin, 12555 Berlin (DE); Smaragdakis, Georgios, 14052 Berlin (DE)
(74) Representative: Vossius & Partner

(56) References cited:
- WO-A1-99/27680
- US-A1- 2002 038 360
- US-A1- 2003 055 979
- US-A1- 2004 136 386
- US-A1- 2007 041 393
- US-B1- 6 205 489
- US-B1- 7 228 359
- MassDaemon et al.: "Bypass proxy server cache", , 27 November 2004 (2004-11-27), pages 1-2, XP002634583, Retrieved from the Internet: URL:http://forums.techguy.org/web-email/30 1301-bypass-proxy-server-cache.html [retrieved on 2011-04-19]
- JH Software ApS: "DNS Caching and Simple Failover", , 14 November 2006 (2006-11-14), pages 1-3, XP002634584, Retrieved from the Internet: URL:http://www.simplefailover.com/outbox/d ns-caching.pdf [retrieved on 2011-04-19]
- BAGGIO A ET AL: "Transparent distributed redirection of HTTP requests", NETWORK COMPUTING AND APPLICATIONS, 2003. NCA 2003. SECOND IEEE INTERN ATIONAL SYMPOSIUM ON 16-18 APRIL 2003, PISCATAWAY, NJ, USA,IEEE, 16 April 2003 (2003-04-16), pages 17-24, XP010640229, ISBN: 978-0-7695-1938-8

## Description

### Technical Field

The present invention relates to a System for processing DNS requests and for aggregating, maintaining and correlating DNS replies, and a method of enhancing DNS replies by utilizing aggregation and maintenance information of DNS queries and replies and utilizing provider-aided distance information.

### Background of the Invention

The present invention relates to a system that enhances the replies of the deployed DNS (Domain Name System) infrastructure. We first describe the principles of the DNS. DNS is a fundamental building block of the Internet and it was introduced to map domain- and host names to IP addresses. A request to map an address submitted by a user of DNS is called DNS request and the answer by the DNS is called DNS reply. DNS relies on a distributed database with a hierarchical structure. The higher level of DNS, called root, is centrally administrated and serves zones via a collection of root servers. Root servers delegate responsibilities for specific zones to other name servers that are responsible for their own domain and they maintain their own database. The later are called authoritative name servers. The local server that a user is utilizing to query the authorative DNS is called DNS resolver. In some cases DNS resolver has to contact more than one authoritative name servers in an iterative fashion to retrieve a mapping. DNS has also been used in order to redirect users to content either to improve end-user experience, to achieve server load balancing or to minimize operational costs transparently to the end-users. The later is a technique that is used by content providers and distributors.

Document US2003/0055979 describes a method for requesting all IP addresses available for a given domain name, compare their response times, and return to the requester the IP with the fastest response.

### Summary of the Invention

According to the present invention, raw DNS requests may be forwarded from clients that can be end-users, applications running on the user-side, operating system processes, or libraries offered to an application, as well as from home gateways and content providers or distributors among others. The replies are gathered from the deployed DNS system to aggregate and correlate the DNS requests and associated replies based on rules. The rules can be pre-defined or automatically generated while processing DNS requests. Such information may be utilized in order to enhance the answers provided to the initiator of the request. More specifically, the present invention allows the discovery of hosts that are eligible to provide the requested content based on the submitted DNS request and are not part of the DNS reply, and generates a list of possible hosts that can be potential sources to deliver the content, ranks this list regarding the network operators preference and sends it back to the initiator of the request after utilizing ranking systems such as Provider-aided Distance Information systems, i.e. PaDIS.

The present invention provides a system for gathering and maintaining DNS requests and replies, for correlating and maintaining DNS requests with the associated replies, for transforming DNS replies into DNS objects which are high performance representations of DNS replies allowing high performance access to the data, for aggregating DNS objects based on pre-defined manual or automatically generated rules that are generated from DNS requests, for enhancing the list of potential hosts to serve content based on previous observed DNS objects and replies, for submitting the modified list of potential hosts to a ranking system such as PaDIS to rank the distance between the initiator of the DNS request and the host and return back the modified list of hosts to the initiator of the request.

The DNS object is generated from a DNS reply, which has been restructured and enhanced for fast processing. It allows for augmenting with specific tags to group the DNS reply based on its properties as well as adding additional potential candidate sources learned in previous DNS replies based on the assigned tags. It also allows for fast transformation into PaDIS requests as well as being converted back into a DNS reply.

In a mode of service, the system according to the present invention gathers and processes DNS requests submitted by users of the system. It then correlates the DNS requests and the DNS replies as monitored when querying the deployed DNS system and generate lists that with, potentially a larger population of hosts, can serve the content.

In further mode of service a user can submit requests to the system. The system according to the present invention will utilize the aggregated view of the past requests and responses, as well as the current responses and generate a list of potential hosts to deliver the content to the end user. After checking the validity of hosts it can send the modified request to a ranking system, such as Provider-aided Distance Information System, PaDIS and sent back a modified reply with ranked list of host IPs.

The present invention relates to a system for aggregating, maintaining and correlating DNS requests as well as DNS replies as they are send to and returned from the deployed DNS system. The DNS requests are correlated with the associated DNS replies. The replies are aggregated and correlated by either pre-defined manual rules or dynamically generated rules in an automated fashion as new DNS requests and replies are monitored. The system according to the present invention is able to enhance the list of potential hosts that can satisfy the request submitted by the DNS client. Moreover, the enhanced list can be forwarded to a recommendation system, such as the Provider-aided Distance Information System, PaDIS and sent back to the initiator of the request.

The described system can be deployed as a DNS Proxy with enhanced functionalities as described above. Possible users of the described system can be end users, applications or browser in the user-side, operating system processes, runtime libraries, home gateways and routers, content producers and providers among others. Possible location of the enhanced DNS Proxy as mentioned above, can be the end-user computer, the home gateway or router, the DNS infrastructure run by an Internet Provider, a third party provider, or a content provider or distributor. The invention is carried out by the method of claim 1 and the system of claim 21.

### Brief Description of the Drawings

Fig. 1, henceforth also referred as Diagram D00, shows the General Architecture of the invention. The main component is the Enhanced DNS Proxy Server that is responsible for the DNS-Query forwarding, processing, aggregating and correlation. The figure also shows the communication with the client of the system, the deployed DNS infrastructure, as well as the rule set that is used to aggregate and maintain the cache of DNS replies.
Fig. 2, henceforth also referred as Diagram D01, shows the flow of operations to perform the processing of the DNS-Queries. The figure also shows the communication of the DNS-Query Processing component, i.e., the Enhanced DNS Proxy of the system with the Forward DNS-Query Handling component, the Domain DNS-Tracking component, the DNS-List Ranking Generation component and the DNS-List IP Reordering component.
Fig. 3, henceforth also referred as Diagram D02, shows the flow of selections in the Forward DNS-Query Handling component. The figure also shows the communication of this component with the DNS-Query Processing component, i.e. Enhanced DNS Proxy and the deployed DNS infrastructure.
Fig. 4, henceforth also referred as Diagram D03, shows the flow of selections in the Domain DNS-Tracking component as well as the communication of this component with the DNS-Query Processing component, i.e. Enhanced DNS Proxy.
Fig. 5, henceforth also referred as Diagram D04, shows the flow of selections in the DNS-List Ranking Generation component as well as the communication of this component with the DNS-Query Processing component, i.e. Enhanced DNS Proxy.
Fig. 6, henceforth also referred as Diagram D05, shows the flow of selections in the IP DNS-List Reordering and the communication with the DNS-Query Processing component, i.e. Enhanced DNS Proxy and the Provider-aided Distance Information System, i.e. PaDIS.
Fig. 7, shows possible deployment settings of the proposed system.

### Description of the Preferred Embodiment

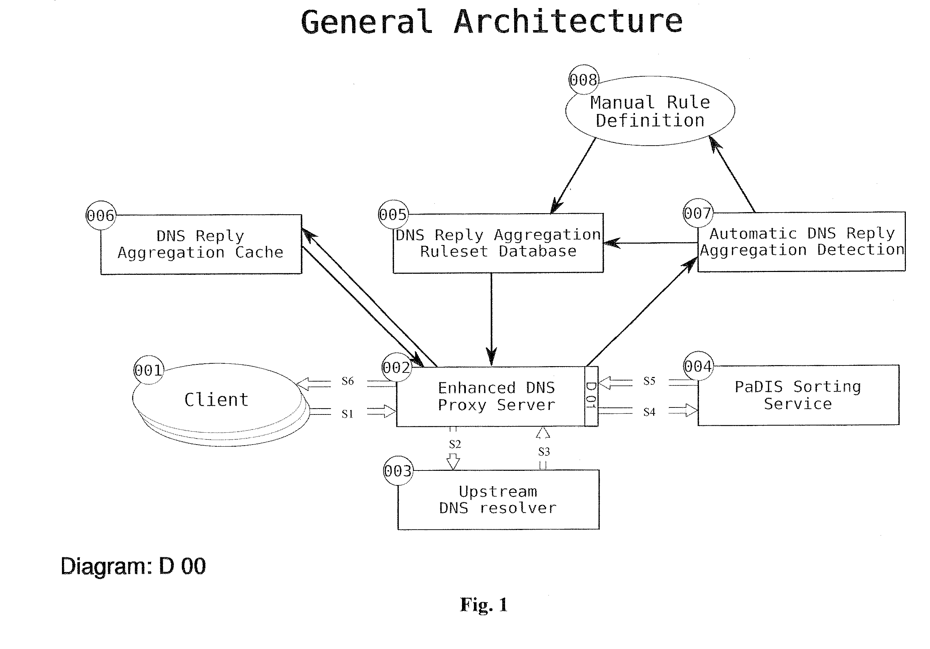

Figure 1 shows the general architecture of the system. The client submits 001 a DNS request S1. The request is received by the Enhanced DNS Proxy 002, also referred as DNS-Query Processing component as it is responsible for the Proxy DNS-Query Processing by using the functionality of the DNS forwarder. The Enhanced DNS Proxy forwards the request S2 to the deployed DNS Resolver 003 and receives the DNS reply S3. It 003 then processes the reply and applies automated or manual aggregation and maintenance rules 005. These rules can be pre-defined or generated on the fly as more DNS replies are gathered, either in an automated fashion 007 or in a manual fashion 008. Once the rules are applied a cache that maintains the aggregated DNS replies is updated 006. The final list of IPs to be ranked is assembled and then the list is sent for ranking S4 to the PaDIS ranking service 004. The result of ranking is received S5 by the Enhanced DNS Proxy 002 a DNS reply is formed and then is sent back S6 to the client 001.

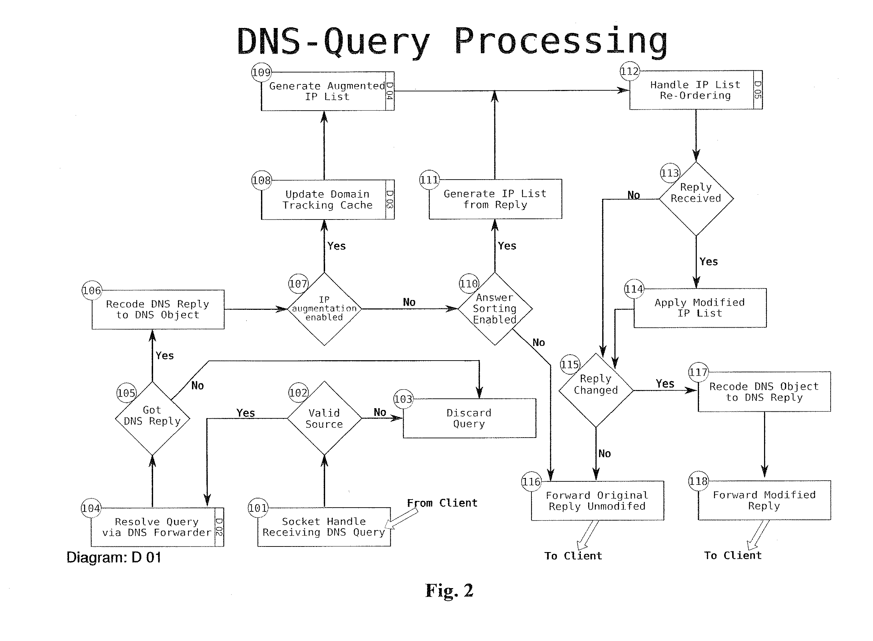

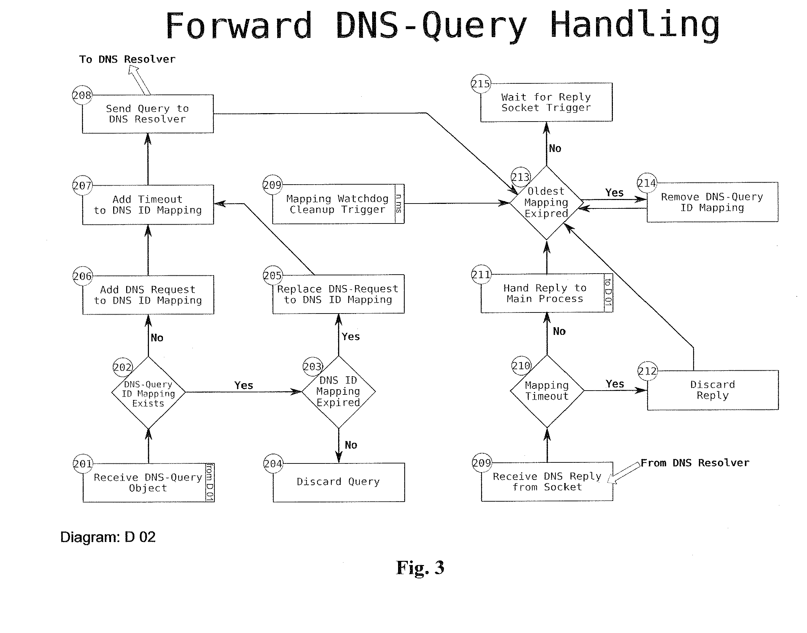

Fig. 2 shows the flow of selections in the Enhanced DNS Proxy that is responsible for DNS-Query Processing. The DNS request by the client is received using a socket 101 that is responsible to handle the query. Then the validity of the DNS request is evaluated 102. The validity can be based on the format of the query as well as a custom ACL (access control list), e.g., the IP of the client of the system or a specific attribute included in the query. If the DNS request is not validated then the DNS is discarded 103. If the DNS request is valid, then the request is forwarded to the query resolver component 104, D01, see more in the description of the Forward DNS-Query Handling component for Fig. 3. Once an answer has been received and processed by the above mentioned component the DNS reply is available 105 or in case of failure the DNS query is discarded 103. The DNS reply is then recoded to DNS request and reply objects 106. The DNS reply is usually transmitted in a binary package of data which a system usually cannot work with. Thus, according to an aspect of this invention the first step is to recode it into a high performance structure that is easily extendable. The recoded data refers to the conversion from binary bit data received from the wire to the internal representation of the system, called DNS Object. In other words it is recoded into a different type of structure, i.e. it is decoded and then encoded into a new format. Then it is checked if the IP augmentation functionality, for enhancing replies with previously received replies, is enabled 107. If the IP augmentation is not enabled then it is checked if the sorting functionality, which ranks only this single reply without any history, is enabled 110; if this is also not the case then the DNS reply is returned unmodified back to the client 116. In this case the invention behaves like a DNS proxy server. If answer sorting is enabled 110 the list of candidates from the reply is transformed into a sorting request. It is forwarded 111 and handed to the IP DNS-List Reordering component 112. If the IP augmentation is enabled then the objects are forwarded to the Domain DNS-Tracking component to update the cache and gather information about past replies which correlate to this reply 108, D03. Once this has taken place, the answer is sent to the IP DNS-List Ranking Generation component 109, D04 to generate the enhanced augmented IP list. The list is then forwarded to the IP DNS-List Reordering component 112, D05 which takes care of handling the list sorting. Then the result from the List Re-Ordering is checked if a valid reply has been received 113 from the ranking service, i.e. PaDIS. If no reply is received, it is checked if the reply has been changed 115; if not then the original, i.e. unmodified DNS reply is sent back to the client of the system 116, otherwise a new reply with the new candidates is encoded 117 and the modified DNS reply is sent back to the client of the system 118. On the other hand, according to this embodiment of the present invention measures are taken in the case, where a valid reply is received from the upstream DNS server but the PaDIS query got lost. In that case, after a certain timeout, the reply is forwarded to the client regardless whether a PaDIS reply is received or not. If the reply from the IP DNS-List Reordering component is received then the modified IP list is used (114) for candidate selection. It is then checked if the reply has been changed 115, if not, then the original reply is sent back to the client of the system 116, otherwise if the reply has been changed, a new reply is generated 117 and the modified reply is sent back 118 to the client.

Fig. 3 shows the flow of selection in the Forward DNS-Query Handling component. The DNS request is received by the DNS-Query Processing component 201 from the query processing DO1. It is then checked if there exists a DNS query ID 202 in order to avoid ID collisions with previously, but still unanswered requests. If there is no DNS Query ID like the submitted currently active, the DNS request ID as specified in the request from the client is added to the mapping of DNS queries 206 and a time to live (in the following "timeout" is used) is also added 207. If a DNS query ID exists in the mapping of DNS queries, then it is checked if the DNS ID in the mapping cache of DNS queries has been expired 203. If the DNS query ID mapping has not been expired then the query is discarded 204. If the DNS query ID mapping has been expired then the timed out DNS request is overwritten by the new DNS request 205 and a new timeout for the DNS query ID mapping is added 207. When the DNS query ID mapping is in place the DNS request is forwarded to the already deployed DNS resolver 208. In order to keep the number of mapped DNS requests to a minimum, it is then checked if the oldest mapping of DNS query ID is expired 213. If so, the mapping is removed 214 and again the oldest mapping is checked. This will ensure that only valid, not timed out mappings are stored. The DNS reply from the DNS resolver is received using a socket 209. It is then checked if the DNS query ID mapping is time-out 210. If so, the reply is discarded 212 and mapping cleaning will start by checking if the oldest DNS query ID mapping is expired 213, otherwise the reply is handed to the Proxy DNS-Query Processing component 211 and then for mapping cleaning it will be checked if the oldest DNS query ID mapping is expired 213. In either case, the mapping cleaning will check the expiration time of the oldest mapping 213, and, if expired, remove it 214. This will loop until no mapping is found anymore or a non expired entry is found. There is also a mapping watchdog 209 to clean up the mapping cache where a trigger frequency value can be set as an input. If the DNS query ID is the oldest then the DNS ID query mapping is removed 214 and periodically again the oldest DNS query ID mapping is checked. If the DNS query ID mapping is not the oldest, then the socket to receive a DNS query ID is in stand by mode 215.

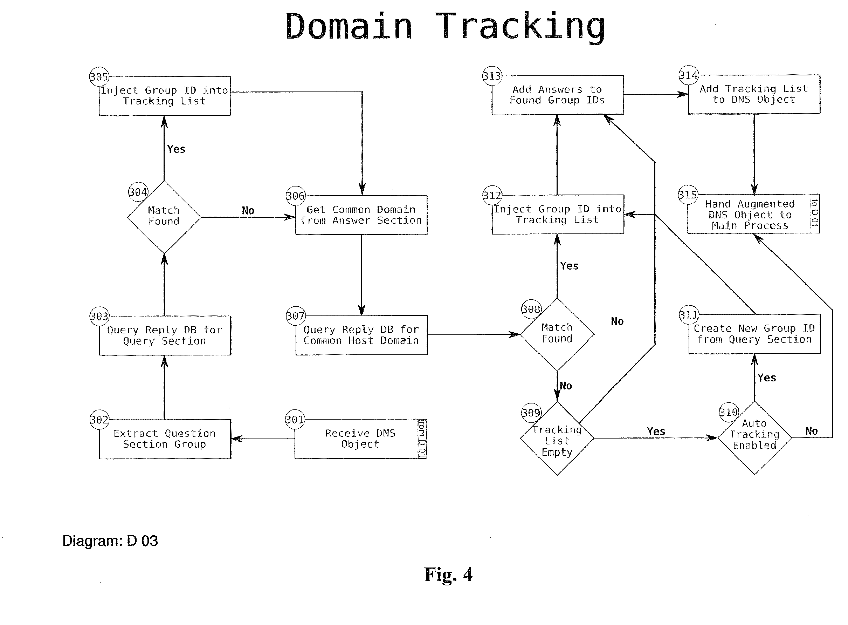

Fig. 4 shows the flow of selection in the Domain DNS-Tracking component of the described system, and the communication with the Enhanced Proxy DNS component. A DNS object is received from the DNS-Query Processing component 301, D01. The DNS question section part is extracted 302 and the database that maintains the aggregation and correlation for the query sections is queried 303. It is then checked if a match is found 304. If there is a match then a first Group ID of the match is injected into the tracking list 305 and then the common domain from the answer section is retrieved 306, which is the longest string all hosts in the answer section have in common. If there is no match then the common domain of the answer section is extracted 306 and then the database of the query replies is queried for rules matching the common domain 307. Next, it is checked if a match is found 308. If a match is found, then a second Group ID is injected into the tracking list 312, the DNS answers records are added into the Group IDs 313 found in the tracking list, the tracking list itself is added into the DNS object 314, and the now augmented DNS object is handed to the DNS-Query Processing component 315, D01. If there is no match found in the last checking 308 then it is checked if the tracking list is empty 309. If the tracking list is not empty all DNS answer records are added into the Group IDs in the tracking list 313. Then the tracking list containing the matching Group IDs is added to the DNS object 314 which is then handed back to the main Query Processing 315, D01. If the tracking list is empty, then it is checked if the auto-tracking capability is enabled 310; if the answer is yes then a new Group ID is created 311 from the reported Query Section and the new Group ID is injected into the Tracking List 312. If the auto-tracking capability is not enabled then the DNS object is sent to the DNS-Query Processing component without any additional information 315. It is to be noted that the first and the second Group ID can be the same, but they can also be different. There is a pool of Group IDs that can potentially match the processed DNS object, i.e. the two steps of injecting the Group ID 305, 312 are two different choosing criteria on how to select Group IDs. In other words they can be taken from the same pool and can be, but need not be, different.

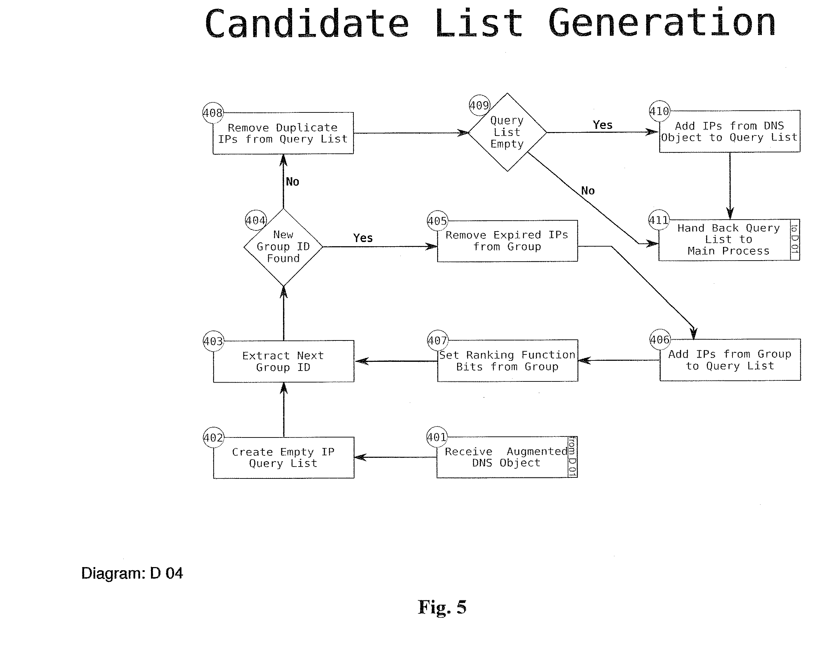

Fig. 5 shows the flow of selection in the Ranking DNS-List Generation component and the communication with the DNS-Query Processing component. The augmented DNS object is received from the DNS-Query Processing component 401. An empty IP Query List is created 402 and the next Group ID is extracted 403. Then it is checked if the Group ID exists 404 if a new Group ID is found then the expired IPs are removed from the Group 405, while still valid IPs from the found Group ID are added to query list 406 and the ranking preferences (ranking function bits) are set from the Group ID 407. Then the next Group ID is extracted 403. If no next Group ID is found, the duplicates of IPs are removed from the Query list 408. Then it is checked if the query list is empty 409. If it is not empty then the query list is handed back to the DNS-Query Processing component 411, D01. If the query list is empty, then IPs from DNS object list are added to the query list 410 and the query list is sent back to the DNS-Query Processing component 411, D01.

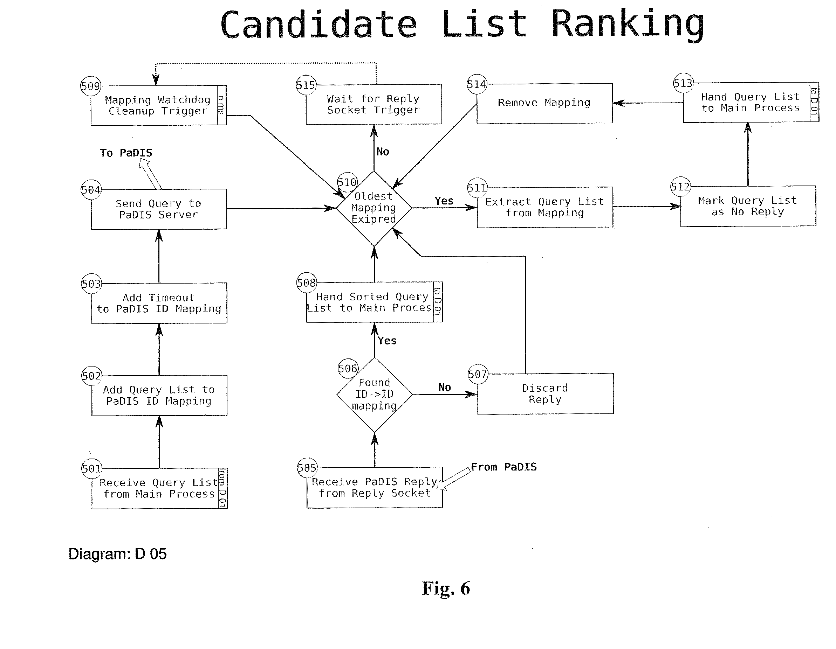

Fig. 6 shows the IP DNS-List Re-Ordering component, and the communication with the DNS-Query Processing component and the deployed Provider-aided distance Information System (PaDIS). A query list is received from the DNS-Query Processing component (501). The query list 502 and a timeout 503 are added in the PaDIS ID Mapping. Then, the query is sent to the PaDIS server 504 for ranking. Then mapping cleaning is started by looking at the oldest mapping entry 510. The reply from PaDIS is received using a socket 505. It is then checked if the reply ID maps to a stored mapping to retrieve the initial request 506. If no, then the reply is discarded 507 and the mapping cleaning by examining the oldest mapping is triggered 510. In parallel there is a mapping watchdog and a clean up trigger that is tuned with some frequency to check for expired entries in the mapping 509. On the other hand if the ID to ID mapping is found, then the sorted query list is sent to the DNS-Query Processing component 508, D01 and again the mapping cleanup will trigger 510. The cleanup of expired mappings is being done by checking if the oldest mapping has expired 510. If it has not become expired, then the process will go to sleep until a new socket event is triggered or the watchdog enters its next check interval 515. If the oldest mapping has been expired then the query list is extracted from the mapping 511, the query list is marked as no reply 512, the query list is sent back to the DNS-Query Processing component 513, D01 and the mapping is removed as well 514. This ensures that, after a given time, answers are still handed back to the client even if the PaDIS does not respond to a query.

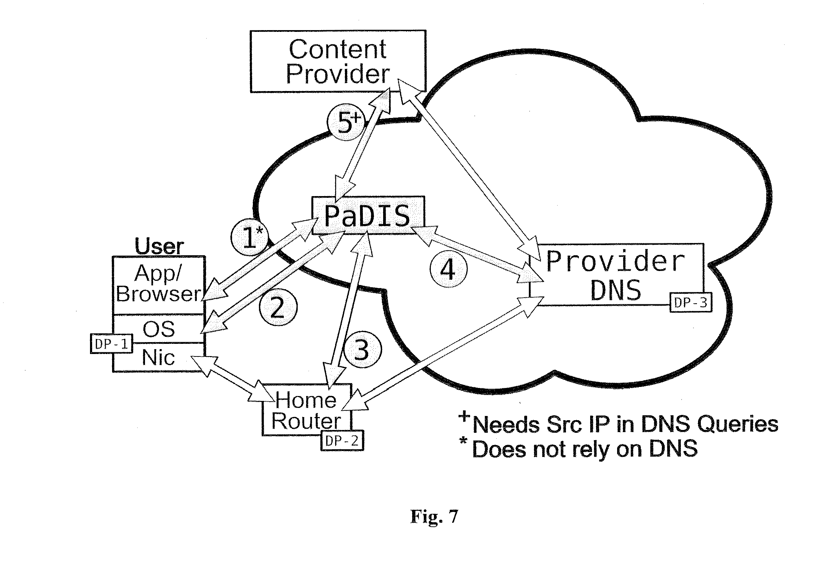

Fig. 7 shows possible deployments of the Enhanced Proxy DNS. The Enhanced Proxy DNS can be located in the user side and can be used by the Application or Browser, the operating system (OS), or the network card (DP-1). If it is used by the Application or the browser then it can bypass the DNS. In the case where the user is the Operating system this is more involved. The Enhanced Proxy DNS can also be located in the home router and can be transparent to the user but still can be re-configured by the user (DP-2). A third possible location for the Enhanced DNS Proxy is in the Provider DNS that is completely transparent by the user. In this setting, content providers or producers can also send their requests and use the service of the Enhanced DNS Proxy, but in this case the source IP has to be also included in the DNS queries(DP-3).

The present invention has now been described with reference to several embodiments thereof. The foregoing detailed description and examples have been given for clarity of understanding only. No unnecessary limitations are to be understood therefrom. It will be apparent to those skilled in the art that many changes can be made in the embodiments described without departing from scope of the present invention. In particular, although features and elements of the present invention are described in the preferred embodiments in particular combinations, each feature or element can be used alone without the other features and elements of the preferred embodiments or in various combinations with or without other features and elements of the invention. Therefore, the scope of the present invention should not be limited to the methods and systems described herein, but only by the claims.

## Claims

1. Method of processing DNS request and DNS reply comprising steps of:
receiving (S1) a DNS request querying an IP address of a host by a DNS-Query processing unit (002, D01), wherein the DNS request is submitted by a client (001),
forwarding (S2) the DNS request to a DNS resolver and receiving (S3) a DNS reply, by the DNS-Query processing unit (002, D01),
**characterized by**
aggregating the DNS reply with previous replies using a ruleset generated from previous DNS requests and associated replies, by the DNS-Query processing unit (002).

2. Method according to claim 1 further comprising:
assembling and sending (S4) a list of IP addresses comprising the DNS reply to a ranking system (004), by the DNS-Query processing unit (002, D01),
ranking the list of IP addresses according to a predetermined network operators preference and delivering (S5) a ranked list of IP addresses to the DNS-Query processing component (002), by the ranking system (004), wherein the list of IP addresses are ranked according to network operators preference;
forming and sending the DNS reply comprised in the ranked list of IP addresses to the client by the DNS-Query processing component (002).

3. Method according to claim 2, wherein a plurality of DNS requests are submitted by a plurality of clients and a plurality of DNS replies are received from the DNS resolver; wherein the plurality of DNS replies are processed using the ruleset and aggregated to assemble the list of IP addresses.

4. Method according to any one of preceding claims, further comprising step of maintaining the ruleset in a ruleset database (005), wherein the ruleset comprises a plurality of rules, wherein the ruleset is dynamically generated by an automatic DNS reply aggregation detection unit (007).

5. Method according to any one of preceding claims, wherein the DNS-Query processing unit (002) is an enhanced proxy server; and/or wherein the network operators preference comprises information about distance between the client and host.

6. Method according to any one of preceding claims, wherein after the DNS reply being processed by applying the ruleset, a DNS reply cache (006) is updated.

7. Method according to any one of preceding claims, wherein the method further comprises step of generating a DNS object from the DNS reply.

8. Method according to claim 7, further comprising the steps of:
returning (116) the DNS reply unmodified to the client if an IP augmentation functionality and a sorting functionality are not enabled; or
transforming and forwarding (111) the DNS object to an IP DNS-List reordering unit (112) if the sorting functionality is enabled.

9. Method according to claim 7, further comprising the steps of:
transforming and forwarding the DNS object to a domain DNS-Tracking cache, in order to update (108) the domain tracking cache and to retrieve information about previous DNS replies being correlated to the DNS reply, if the IP augmentation functionality is enabled; and sending (109) the retrieved information to the IP DNS-List ranking generation unit, to generate an enhanced augmented list of IP addresses and to forward the enhanced augmented list to the IP DNS-List Re-Ordering unit (112).

10. Method according to claim 9, further comprising the steps of:
sending (116) the DNS reply unmodified to the client if no DNS reply is received and if the DNS reply has not been changed (115), or modifying and forwarding (118) the DNS reply to the client if a reply is received and if the DNS reply has been changed (115).

11. Method according to any one of claims 7 to 10, further comprising steps of:
receiving (201) the DNS object by the DNS-Query processing unit D01;
adding a DNS request ID (206) to a DNS query ID mapping if no DNS query ID mapping exists;
sending (208) the DNS request to the DNS resolver;
forwarding (211) the DNS reply from the DNS resolver to the DNS-Query processing unit (D01) if the DNS query ID mapping is not timed out (210).

12. Method according to claim 11, further comprises the steps of:
adding a first timeout (207) to the DNS query ID mapping if no DNS query ID mapping exists;
replacing (205) the DNS request with a new DNS request and adding (207) a second timeout to the DNS query ID mapping if a DNS query ID mapping exists and has been expired.

13. Method according to claim 11 or 12, further comprising the step of:
initiating a cleaning up process (213) for expired DNS query ID mappings.

14. Method according to any one of claims 7 to 13, further comprising steps of:
receiving the encoded DNS object comprising the DNS request and the DNS reply by the DNS-Query processing unit (301, D01); extract a DNS (302) question section part;
querying (303) and matching (304) the DNS question section part with a reply database to obtain a Group ID of the matching;
injecting the Group ID into a tracking list if there is a match, and adding (314) the tracking list comprising the Group ID to the DNS object in order to obtain an augmented DNS object;
sending (315) the augmented DNS object to the DNS-Query processing unit (D01).

15. Method according to claim 14, wherein the step of injecting the Group ID further comprising steps of:
injecting (305) a first Group ID into the tracking list if there is a match of the first Group ID in the reply database;
retrieving (306) and forwarding (307) common domain from an answer section to querying the reply for matching the common domain;
injecting a second Group ID into the tracking list if there is a match of the second Group ID in the reply database; and adding DNS answers into the tracking list;
wherein the first and the second Group ID are from a group ID pool.

16. Method according to claims 14 or 15, further comprising the steps of:
creating (402) an empty IP-Query list and extracting (403) the Group ID from the augmented DNS object;
removing (405) an expired IP address from the Group corresponding to the group ID, or adding (406) a valid IP address from the Group ID to the IP-Query list if a new Group ID is found; or removing (408) a duplicated IP address from the IP-Query list if no new Group ID is found;
adding (410) the IP address from the DNS object to the IP-Query list if the IP-Query list is empty; and sending the IP-Query list to the DNS-Query processing unit (D01).

17. Method according to claim 16, further comprising the steps of:
receiving (505) the IP-Query list from the DNS-Query processing unit by the ranking system;
sending (504) an ID mapping to a server of the ranking system;
sending (508) the ID mapping from the ranking system to the DNS-Query processing unit.

18. Method according to claim 17, further comprising the steps of:
adding (503) a third timeout to the ID mapping of the ranking system, and
initiating (510) the cleaning up process for expired ID mappings if the ID mapping being identified as a stored mapping.

19. Method according to claim 17 or 18, further comprising the steps of:
extracting (511) the IP-Query list from the ID mapping; and
marking (512) the IP-Query list as no reply and sending (513) the IP-Query list to the DNS-Query processing unit.

20. Method according to any one of claims 8 to 19, wherein a cleaning up process is initiated periodically and carried out by examining of oldest DNS query ID mapping or oldest ID mapping of the ranking system, if the DNS query ID mapping or the ID mapping is expired; and wherein the cleaning up process is preferably controlled by a mapping watchdog and/or a clean up trigger; and the method optionally further comprising steps of:
if the oldest ID mapping is expired, then extracting the IP-Query list from the ID mapping, indicating the IP-Query list as no reply, sending the IP-Query list to the DNS-Query processing unit and removing the ID mapping.

21. System for processing DNS request and DNS reply comprising:
a DNS-Query processing unit (002, D01) being adapted to receive a DNS request querying an IP address of a host, wherein the DNS request is submitted by a client (001);
a DNS resolver being adapted to resolve a DNS request forwarded by the DNS-Query processing unit and to send a DNS reply to the DNS-Query processing unit,
**characterized in that**
the DNS-Query processing unit aggregates the DNS reply with previous replies using a ruleset generated from previous DNS requests and associated replies.

22. System according to claim 21 further comprising:
a ranking system being adapted to receive a list of IP addresses comprising the DNS reply assembled by the DNS-Query processing unit,
wherein the ranking system being adapted to rank the list of IP addresses according to a predetermined network operators preference and to deliver (S4) a ranked list of IP addresses to the DNS-Query processing component; wherein the list of IP addresses are ranked according to the network operators preference; and
wherein the DNS-Query processing unit being adapted to form and send the DNS reply comprised in the ranked list of IP addresses to the client.

23. System according to claim 21 or 22, further comprising:
a DNS reply cache;
a manual rule definition for predetermining the ruleset; and
an automatic DNS reply aggregation detection unit being adapted to dynamically generate the ruleset, wherein the ruleset comprises a plurality of rules and is preferably maintained in a ruleset database;
wherein the DNS-Query processing unit is preferably an enhanced proxy server, the network operators preference preferably comprises information about distance between the client and host.

## Patentansprüche

1. Verfahren zum Verarbeiten einer DNS-Anfrage und einer DNS-Antwort, mit den Schritten:
Empfangen (S1) einer DNS-Anfrage, die eine IP-Adresse eines Host abfragt, durch eine DNS-Abfrageverarbeitungseinheit (002, D01), wobei die DNS-Anfrage durch einen Client (001) übermittelt wird; und
Übermitteln (S2) der DNS-Anfrage an einen DNS-Resolver und Empfangen (S3) einer DNS-Antwort durch die DNS-Abfrageverarbeitungseinheit (002, D01);
**gekennzeichnet durch**
Kumulieren der DNS-Antwort mit vorangehenden Antworten unter Verwendung eines Regelsatzes, der von vorangehenden DNS-Anfragen und zugeordneten Antworten erzeugt wird, **durch** die DNS-Abfrageverarbeitungseinheit (002, D01).

2. Verfahren nach Anspruch 1, ferner mit den Schritten:
Zusammenstellen und Übertragen (S4) einer Liste von IP-Adressen, die die DNS-Antwort enthalten, an ein Rangfolgeerstellungssystem (004) durch die DNS-Abfrageverarbeitungseinheit (002, D01);
Erstellen einer Rangfolge in der Liste von IP-Adressen gemäß einer vorgegebenen Netzwerkbetreiberpräferenz und Übertragen (S5) der in einer Rangfolge sortierten Liste von IP-Adressen an die DNS-Abfrageverarbeitungskomponente (002) durch das Rangfolgeerstellungssystem (004), wobei die Liste von IP-Adressen gemäß der Netzwerkbetreiberpräferenz in einer Rangfolge sortiert ist; und
Formen und Übertragen der DNS-Antwort, die in der in der Rangfolge sortierten Liste von IP-Adressen enthalten ist, an den Client durch die DNS-Abfrageverarbeitungskomponente (002).

3. Verfahren nach Anspruch 2, wobei mehrere DNS-Anfragen durch mehrere Clients übermittelt werden und mehrere DNS-Antworten vom DNS-Resolver empfangen werden, wobei die mehreren DNS-Antworten unter Verwendung des Regelsatzes verarbeitet und kumuliert werden, um die Liste von IP-Adressen zu erstellen.

4. Verfahren nach einem der vorangehenden Ansprüche, ferner mit dem Schritt zum Speichern des Regelsatzes in einer Regelsatzdatenbank (005), wobei der Regelsatz mehrere Regeln enthält, und wobei der Regelsatz durch eine automatische DNS-Antwortkumulationserfassungseinheit (007) dynamisch erzeugt wird.

5. Verfahren nach einem der vorangehenden Ansprüche, wobei die DNS-Abfrageverarbeitungseinheit (002) ein Enhanced-Proxy-Server ist, und/oder wobei die Netzwerkbetreiberpräferenz Information über den Abstand zwischen dem Client und dem Host enthält.

6. Verfahren nach einem der vorangehenden Ansprüche, wobei ein DNS-Antwort-Cache-Speicher (006) aktualisiert wird, nachdem die DNS-Antwort durch Anwenden des Regelsatzes verarbeitet wurde.

7. Verfahren nach einem der vorangehenden Ansprüche, wobei das Verfahren ferner einen Schritt zum Erzeugen eines DNS-Objekts von der DNS-Antwort aufweist.

8. Verfahren nach Anspruch 7, ferner mit den Schritten:
Zurückübertragen (116) der unmodifizierten DNS-Antwort an den Client, wenn eine IP-Erweiterungsfunktionalität und eine Sortierfunktionalität nicht aktiviert sind; oder
Umwandeln und Übermitteln (111) des DNS-Objekts an eine IP-DNS-Listenumordnungseinheit (112), wenn die Sortierfunktionalität aktiviert ist.

9. Verfahren nach Anspruch 7, ferner mit den Schritten:
Umwandeln und Übermitteln des DNS-Objekts an einen Domain-DNS-Tracking-Cache-Speicher, um den Domain-DNS-Tracking-Cache-Speicher zu aktualisieren (108) und Information über vorangehende DNS-Antworten abzurufen, die mit der DNS-Antwort korrelieren, wenn die IP-Erweiterungsfunktionalität aktiviert ist; und
Übertragen (109) der abgerufenen Information an eine IP-DNS-Listenrangfolgeerstellungseinheit, um eine erweiterte Liste von IP-Adressen zu erzeugen und die erweiterte Liste an die IP-DNS-Listenumordnungseinheit zu übermitteln (112).

10. Verfahren nach Anspruch 9, ferner mit den Schritten:
Übertragen (116) der unmodifizierten DNS-Antwort an den Client, wenn keine DNS-Antwort empfangen wird und die DNS-Antwort nicht geändert worden ist (115), oder Modifizieren und Übermitteln (118) der DNS-Antwort an den Client, wenn eine Antwort empfangen wird und die DNS-Antwort geändert worden ist (115).

11. Verfahren nach einem der Ansprüche 7 bis 10, ferner mit den Schritten:
Empfangen (201) des DNS-Objekts durch die DNS-Abfrageverarbeitungseinheit (D1);
Hinzufügen einer DNS-Anfrage-ID (206) zu einer DNS-Abfrage-ID-Zuordnung, wenn keine DNS-Abfrage-ID-Zuordnung existiert;
Übertragen (208) der DNS-Anfrage an den DNS-Resolver;
Übermitteln (211) der DNS-Antwort vom DNS-Resolver an die DNS-Abfrageverarbeitungseinheit (D01), wenn eine Zeitbegrenzung für die DNS-Abfrage-ID-Zuordnung nicht überschritten ist (210).

12. Verfahren nach Anspruch 11, ferner mit den Schritten:
Hinzufügen einer ersten Zeitbegrenzung (207) zur DNS-Abfrage-ID-Zuordnung, wenn keine DNS-Abfrage-ID-Zuordnung existiert;
Ersetzen (205) der DNS-Anfrage durch eine neue DNS-Anfrage und Hinzufügen (207) einer zweiten Zeitbegrenzung zur DNS-Abfrage-ID-Zuordnung, wenn eine DNS-Abfrage-ID-Zuordnung existiert und abgelaufen ist.

13. Verfahren nach Anspruch 11 oder 12, ferner mit dem Schritt zum Aktivieren eines Bereinigungsprozesses (213) für abgelaufene DNS-Abfrage-ID-Zuordnungen.

14. Verfahren nach einem der Ansprüche 7 bis 13, ferner mit den Schritten:
Empfangen des codierten DNS-Objekts, das die DNS-Anfrage und die DNS-Antwort enthält, durch die DNS-Abfrageverarbeitungseinheit (301, D01);
Extrahieren (302) eines DNS-Anfrageabschnitts;
Abfragen (303) und Abgleichen (304) des DNS-Anfrageabschnitts mit der Antwortdatenbank zum Erhalten einer Gruppen-ID des Abgleichs;
Einfügen der Gruppen-ID in eine Tracking-Liste, wenn eine Übereinstimmung existiert, und Hinzufügen (314) der Tracking-Liste, die die Gruppen-ID enthält, zum DNS-Objekt, um ein erweitertes DNS-Objekt zu erhalten; und
Übertragen (315) des erweiterten DNS-Objekts an die DNS-Abfrageverarbeitungseinheit (D01).

15. Verfahren nach Anspruch 14, wobei der Schritt zum Einfügen der Gruppen-ID ferner die Schritte aufweist:
Einfügen (305) einer ersten Gruppen-ID in die Tracking-Liste, wenn eine Übereinstimmung der ersten Gruppen-ID in der Antwortdatenbank vorliegt;
Abrufen (306) und Übermitteln (307) einer gemeinsamen Domain des Antwortabschnitts zum Abfragen der Antwortdatenbank zum Abgleichen der gemeinsamen Domain; und
Einfügen einer zweiten Gruppen-ID in die Tracking-Liste, wenn eine Übereinstimmung der zweiten Gruppen-ID in der Antwortdatenbank vorliegt, und Hinzufügen von DNS-Antworten in die Tracking-Liste,
wobei die erste und die zweite Gruppen-ID von einem Gruppen-ID-Pool ausgewählt werden.

16. Verfahren nach Anspruch 14 oder 15, ferner mit den Schritten:
Erzeugen (402) einer leeren IP-Abfrageliste und Extrahieren (403) der Gruppen-ID vom erweiterten DNS-Objekt;
Entfernen (405) einer abgelaufenen IP-Adresse von der der Gruppen-ID entsprechenden Gruppe oder Hinzufügen (406) einer gültigen IP-Adresse von der Gruppen-ID zur IP-Abfrageliste, wenn eine neue Gruppen-ID gefunden wird, oder Entfernen (408) einer duplizierten IP-Adresse von der IP-Abfrageliste, wenn keine neue Gruppen-ID gefunden wird; und
Hinzufügen (410) der IP-Adresse vom DNS-Objekt zur IP-Abfrageliste, wenn die IP-Abfrageliste leer ist, und Übertragen der IP-Abfrageliste an die DNS-Abfrageverarbeitungseinheit (D01).

17. Verfahren nach Anspruch 16, ferner mit den Schritten:
Empfangen (505) der IP-Abfrageliste von der DNS-Abfrageverarbeitungseinheit durch das Rangfolgeerstellungssystem;
Übertragen (504) einer ID-Zuordnung zu einem Server des Rangfolgeerstellungssystems; und
Übertragen (508) der ID-Zuordnung vom Rangfolgeerstellungssystem zur DNS-Abfrageverarbeitungseinheit.

18. Verfahren nach Anspruch 17, ferner mit den Schritten:
Hinzufügen (503) einer dritten Zeitbegrenzung zur ID-Zuordnung des Rangfolgeerstellungssystems; und
Aktivieren (510) des Bereinigungsprozesses für abgelaufene ID-Zuordnungen, wenn die ID-Zuordnung als eine gespeicherte Zuordnung identifiziert wird.

19. Verfahren nach Anspruch 17 oder 18, ferner mit den Schritten:
Extrahieren (511) der IP-Abfrageliste von der ID-Zuordnung; und
Markieren (512) der IP-Abfrageliste als "keine Antwort" und Übertragen (513) der IP-Abfrageliste an die DNS-Abfrageverarbeitungseinheit.

20. Verfahren nach einem der Ansprüche 8 bis 19, wobei ein Bereinigungsprozess periodisch aktiviert und ausgeführt wird durch Untersuchen der ältesten DNS-Abfrage-ID-Zuordnung oder der ältesten ID-Zuordnung des Rangfolgeerstellungssystems, wenn die DNS-Abfrage-ID-Zuordnung oder die ID-Zuordnung abgelaufen ist, und
wobei der Bereinigungsprozess vorzugsweise durch einen Zuordnungs-Watchdog und/oder einen Bereinigungstrigger gesteuert wird, und
wobei das Verfahren ferner die Schritte aufweist:
wenn die älteste ID-Zuordnung abgelaufen ist: Extrahieren der IP-Abfrageliste von der ID-Zuordnung, Markieren der IP-Abfrageliste als "keine Antwort", Übertragen der IP-Abfrageliste an die DNS-Abfrageverarbeitungseinheit und Entfernen der ID-Zuordnung.

21. System zum Verarbeiten einer DNS-Anfrage und einer DNS-Antwort, mit:
einer DNS-Abfrageverarbeitungseinheit (002, D01), die dazu eingerichtet ist, eine DNS-Anfrage zu empfangen, die eine IP-Adresse eines Host abfragt, wobei die DNS-Anfrage durch einen Client (001) übermittelt wird;
einem DNS-Resolver, der dazu eingerichtet ist, eine durch die DNS-Abfrageverarbeitungseinheit übermittelte DNS-Anfrage zu zerlegen und eine DNS-Antwort an die DNS-Abfrageverarbeitungseinheit zu übertragen;
**dadurch gekennzeichnet, dass**
die DNS-Abfrageverarbeitungseinheit die DNS-Antwort unter Verwendung eines Regelsatzes, der von vorangehenden DNS-Anfragen und zugeordneten Antworten erzeugt wird, mit vorangehenden Antworten kumuliert.

22. System nach Anspruch 21, ferner mit:
einem Rangfolgeerstellungssystem, das dazu eingerichtet ist, eine Liste von IP-Adressen zu empfangen, die die durch die DNS-Abfrageverarbeitungseinheit kumulierten DNS-Antwort enthält,
wobei das Rangfolgeerstellungssystem dazu eingerichtet ist, die Liste von IP-Adressen gemäß einer vorgegebenen Netzwerkbetreiberpräferenz zu sortieren und eine sortierte Liste von IP-Adressen an die DNS-Abfrageverarbeitungskomponente zu übertragen (S4), wobei die Liste von IP-Adressen gemäß der Netzwerkbetreiberpräferenz sortiert ist, und
wobei die DNS-Abfrageverarbeitungseinheit dazu eingerichtet ist, die in der sortierten Liste von IP-Adressen enthaltene DNS-Antwort zu erzeugen und an den Client zu übertragen.

23. System nach Anspruch 21 oder 22, ferner mit:
einem DNS-Antwort-Cache-Speicher;
einer manuellen Regeldefinition zum Festlegen des Regelsatzes; und
einer Einheit zum automatischen Erfassen einer DNS-Antwortkumulierung, die dazu eingerichtet ist, den Regelsatz dynamisch zu erzeugen, wobei der Regelsatz mehrere Regeln enthält und vorzugsweise in einer Regelsatzdatenbank gespeichert ist,
wobei die DNS-Abfrageverarbeitungseinheit vorzugsweise ein Enhanced-Proxy-Server ist und die Netzwerkbetreiberpräferenz vorzugsweise Information über den Abstand zwischen dem Client und dem Host enthält.

## Revendications

1. Procédé de traitement d'une demande DNS et d'une réponse DNS, comprenant les étapes suivantes :
réception (S1) d'une demande DNS sollicitant une adresse IP d'un hôte par une unité de traitement (002, D01) de demande DNS, la demande DNS étant soumise par un client (001),
transmission (S2) de la demande DNS à un résolveur DNS et réception (S3) d'une réponse DNS par l'unité de traitement (002, D01) de demande DNS,
**caractérisé par**
l'agrégation de la réponse DNS à des réponses antérieures en appliquant un jeu de règles généré par des demandes DNS antérieures et des réponses correspondantes par l'unité de traitement (002) de demande DNS.

2. Procédé selon la revendication 1 comprenant en outre :
l'assemblage et l'envoi (S4) d'une liste d'adresses IP comprenant la réponse DNS à un système de classement (004) par l'unité de traitement (002, D01) de demande DNS,
classement de la liste d'adresses IP en fonction d'une préférence d'opérateur de réseau définie et délivrance (S5) d'une liste d'adresses IP classée au composant de traitement (002) de demande DNS par le système de classement (004), la liste d'adresses IP étant classée en fonction d'une préférence d'opérateur de réseau ;
formation et envoi au client de la réponse DNS comprise dans la liste d'adresses IP classée par le composant de traitement (002) de demande DNS.

3. Procédé selon la revendication 2, où une pluralité de demandes DNS sont soumises par une pluralité de clients et une pluralité de réponses DNS sont reçues du résolveur DNS ; la pluralité de réponses DNS étant traitées en appliquant le jeu de règles et agrégées pour assembler la liste d'adresses IP.

4. Procédé selon l'une des revendications précédentes, comprenant en outre l'étape de stockage du jeu de règles dans une base de données de jeux de règles (005), le jeu de règles comprenant une pluralité de règles, le jeu de règles étant généré de manière dynamique par une unité de détection (007) automatique d'agrégation de réponses DNS.

5. Procédé selon l'une des revendications précédentes, où l'unité de traitement (002) de demande DNS est un serveur mandataire amélioré ; et/ou où la préférence d'opérateur de réseau comprend une information relative à la distance entre le client et l'hôte.

6. Procédé selon l'une des revendications précédentes, où un cache de réponse DNS (006) est mis à jour après traitement de la réponse DNS par application du jeu de règles.

7. Procédé selon l'une des revendications précédentes, où ledit procédé comprend en outre l'étape de génération d'un objet DNS à partir de la réponse DNS.

8. Procédé selon la revendication 7, comprenant en outre les étapes suivantes :
retour (116) de la réponse DNS inchangée au client si une fonctionnalité d'augmentation IP et une fonctionnalité de tri ne sont pas activées ; ou
transformation et transmission (111) de l'objet DNS à une unité de réorganisation (112) de liste DNS IP si la fonctionnalité de tri est activée.

9. Procédé selon la revendication 7, comprenant en outre les étapes suivantes :
transformation et transmission de l'objet DNS à un cache de suivi de domaine DNS afin de mettre à jour (108) le cache de suivi de domaine et d'extraire une information relative aux réponses DNS antérieures corrélées à la réponse DNS si la fonctionnalité d'augmentation IP est activée ; et envoi (109) de l'information extraite à l'unité de génération de classement de liste DNS IP fin de générer une liste d'adresses IP augmentée améliorée et de transmettre la liste augmentée améliorée à l'unité de réorganisation (112) de liste DNS IP.

10. Procédé selon la revendication 9, comprenant en outre les étapes suivantes :
envoi (116) de la réponse DNS inchangée au client si aucune réponse DNS n'est reçue,
et si la réponse DNS n'a pas été modifiée (115), ou modification et transmission (118) de la réponse DNS au client si une réponse est reçue et si la réponse DNS a été modifiée (115).

11. Procédé selon l'une des revendications 7 à 10, comprenant en outre les étapes suivantes
réception (201) de l'objet DNS par l'unité de traitement de demande DNS (D01) ;
ajout d'une ID (206) de demande DNS à un mappage d'ID de demande DNS si aucun mappage d'ID de demande DNS n'est présenté ;
envoi (208) de la demande DNS au résolveur DNS ;
transmission (211) de la réponse DNS du résolveur DNS à l'unité de traitement (D01) de demande DNS si le mappage d'ID de demande DNS n'est pas expiré (210).

12. Procédé selon la revendication 11, comprenant en outre les étapes suivantes :
ajout d'un premier délai (207) au mappage d'ID de demande DNS si aucun mappage d'ID de demande DNS n'est présenté ;
remplacement (205) de la demande DNS par une nouvelle demande DNS et ajout (207) d'un deuxième délai au mappage d'ID de demande DNS si un mappage d'ID de demande DNS est présenté et est expiré.

13. Procédé selon la revendication 11 ou la revendication 12, comprenant en outre l'étape suivante :
déclenchement d'un processus de nettoyage (213) pour des mappages d'ID de demande DNS expirés.

14. Procédé selon l'une des revendications 7 à 13, comprenant en outre les étapes suivantes
réception de l'objet DNS encodé comprenant la demande DNS et la réponse DNS par l'unité de traitement (301, D01) de demande DNS ; extraction (302) d'une séquence de question DNS ;
inspection (303) et recherche de correspondance (304) de la séquence de question DNS avec une base de données de réponses pour obtenir une ID de groupe de la correspondance ;
intégration de l'ID de groupe dans une liste de suivi en cas de correspondance, et ajout (314) de la liste de suivi comprenant l'ID de groupe à l'objet DNS afin d'obtenir un objet DNS augmenté ;
envoi (315) de l'objet DNS augmenté à l'unité de traitement (D01) de demande DNS.

15. Procédé selon la revendication 14, où l'étape d'intégration de l'ID de groupe comprend en outre les étapes suivantes :
intégration (305) d'une première ID de groupe dans la liste de suivi si une correspondance est présentée pour la première ID de groupe dans la base de données de réponses ;
extraction (306) et transmission (307) d'un domaine commun d'une séquence de réponse pour rechercher la correspondance de la réponse avec le domaine commun ;
intégration d'une deuxième ID de groupe dans la liste de suivi si une correspondance est présentée pour la deuxième ID de groupe dans la base de données de réponses ; et ajout de réponses DNS dans la liste de suivi ;
la première et la deuxième ID de groupe étant issues d'un pool d'ID de groupe.

16. Procédé selon la revendication 14 ou la revendication 15, comprenant en outre les étapes suivantes :
création (402) d'une liste de demandes IP vide et extraction (403) de l'ID de groupe de l'objet DNS augmenté ;
suppression (405) d'une adresse IP expirée du groupe correspondant à l'ID de groupe, ou ajout (406) d'une adresse IP valide de l'ID de groupe à la liste de demandes IP si une nouvelle ID de groupe est trouvée ; ou suppression (408) d'une adresse IP dupliquée de la liste de demandes IP si aucune ID de groupe n'est trouvée ;
ajout (410) de l'adresse IP de l'objet DNS à la liste de demandes IP si la liste de demandes IP est vide ; et envoi de la liste de demandes IP à l'unité de traitement (D01) de demande DNS.

17. Procédé selon la revendication 16, comprenant en outre les étapes suivantes :
réception (505) de la liste de demandes IP de l'unité de traitement de demande DNS par le système de classement ;
envoi (504) d'un mappage d'ID à un serveur du système de classement ;
envoi (508) du mappage d'ID du système de classement à l'unité de traitement de demande DNS.

18. Procédé selon la revendication 17, comprenant en outre les étapes suivantes :
ajout (503) d'un troisième délai au mappage d'ID du système de classement, et
déclenchement (510) du processus de nettoyage pour des mappages d'ID expirés si le mappage d'ID est identifié comme mappage mémorisé.

19. Procédé selon la revendication 17 ou la revendication 18, comprenant en outre les étapes suivantes :
extraction (511) de la liste de demandes IP du mappage d'ID ; et
marquage (512) de la liste de demandes IP comme sans réponse et envoi (513) de la liste de demandes IP à l'unité de traitement de demande DNS.

20. Procédé selon l'une des revendications 8 à 19, où un processus de nettoyage est périodiquement déclenché et exécuté par examen du mappage d'ID de demande DNS le plus ancien ou du mappage d'ID du système de classement le plus ancien, si le mappage d'ID de demande DNS ou le mappage d'ID est expiré ; et où le processus de nettoyage est préférentiellement commandé par chien de garde de mappage et/ou un déclencheur de nettoyage ; et le procédé comprenant en outre les étapes suivantes en option :
si le mappage d'ID le plus ancien est expiré, extraction de la liste de demandes IP du mappage d'ID, indiquant la liste de demandes IP comme sans réponse, envoi de la liste de demandes IP à l'unité de traitement de demande DNS et suppression du mappage d'ID.

21. Système de traitement de demande DNS et de réponse DNS, comprenant :
une unité de traitement de demande DNS (002, D01) prévue pour recevoir une demande DNS sollicitant une adresse IP d'un hôte, la demande DNS étant soumise par un client (001) ;
un résolveur DNS prévu pour résoudre une demande DNS transmise par l'unité de traitement de demande DNS et pour envoyer une réponse DNS à l'unité de traitement de demande DNS,
**caractérisé en ce que** l'unité de traitement de demande DNS agrège la the réponse DNS à des réponses antérieures en appliquant un jeu de règles généré par des demandes DNS antérieures et des réponses correspondantes.

22. Système selon la revendication 21, comprenant en outre :
un système de classement prévu pour recevoir une liste d'adresses IP comprenant la réponse DNS assemblée par l'unité de traitement de demande DNS,
le système de classement étant prévu pour classer la liste d'adresses IP en fonction d'une préférence d'opérateur de réseau définie et pour délivrer (S4) une liste d'adresses IP classée au composant de traitement de demande DNS ; la liste d'adresses IP étant classée en fonction de la préférence d'opérateur de réseau ; et
où l'unité de traitement de demande DNS st prévue pour former et envoyer au client la réponse DNS comprise dans la liste d'adresses IP classée.

23. Système selon la revendication 21 ou la revendication 22, comprenant en outre :
un cache de réponse DNS ;
une définition de règle manuelle pour la prédétermination du jeu de règles ; et
une unité de détection automatique d'agrégation de réponses DNS prévue pour générer le jeu de règles de manière dynamique, le jeu de règles comprenant une pluralité de règles et étant préférentiellement stocké dans une base de données de jeux de règles ;
l'unité de traitement de demande DNS étant préférentiellement un serveur mandataire amélioré, la préférence d'opérateur de réseau comprenant préférentiellement une information relative à la distance entre le client et l'hôte.
